# EUROPEAN PATENT APPLICATION

(11) **EP 1 578 150 A1**
(43) Date of publication of application: **21.09.2005**
(21) Application number: 04445033.6
(22) Date of filing: 16.03.2004
(51) Int. Cl.: H04Q 7/22

(54) **System and method for transmission of collector cards in a wireless network**

(71) Applicant: Sony Ericsson Mobile Communications AB, 221 88 Lund (SE)
(72) Inventor: Nelson, Joakim, 222 70 Lund (SE)
(74) Representative: Lindberg, Olle Nils Olof

(57) **Abstract**

System for handling of mobile collector cards, comprising a mobile communications network (1), a mobile radio terminal (5) devised for radio communication with said network, said mobile terminal comprising a memory (58) for storing image data and a display for presenting images represented by said image data. The terminal is devised for transmission of digital mobile collector cards comprising image data (7) and an image identity code (8) associated with a certain image, over said network, wherein said terminal comprises means (57) for generating and transmitting a data signal (20) including said mobile collector card, and means for erasing the image data of said mobile collector card from said memory, responsive to the transmission of the data signal.

## Description

### Field of the invention

The present invention relates generally to mobile collector cards, which are distributed in a mobile communications network to and between mobile radio terminals.

### Background

The cellular telephone industry has had an enormous development in the world in the past decades. From the initial analog systems, such as those defined by the standards AMPS (Advanced Mobile Phone System) and NMT (Nordic Mobile Telephone), the development has during recent years been almost exclusively focused on standards for digital solutions for cellular radio network systems, such as D-AMPS (e.g., as specified in EIA/TIA-IS-54-B and IS-136) and GSM (Global System for Mobile Communications). Currently, the cellular technology is entering the so called 3^{rd} generation, providing several advantages over the former, 2^{nd} generation, digital systems referred to above.

Many of the advances made in mobile phone technology are related to functional features, such as better displays, more efficient and longer lasting batteries, built-in cameras, and so on. Furthermore, along with increased functionality and better transmission capabilities, new and more advanced services are made available. Within short, most terminals sold will be fitted with cameras and arranged to both show and transmit moving pictures. Besides video communication, such features lay a foundation for other types of services. Image data can be downloaded to a user terminal from network-connected servers or other terminals, representing background images, screensavers or wallpapers. The improved displays of modem radio terminals are also usable for playing fairly sophisticated computer games.

Still, it appears that there is an ever-increasing desire from the market to find more ways of using radio terminals in general, and mobile phones in particular.

### Summary of the invention

Hence, it is an object of the present invention to provide a service, and means for technical implementation of such a service in a radio communication network, which makes use of hitherto unexploited resources of digital radio telecommunication. For this purpose, the present invention defines a new concept referred to herein as mobile collector cards. For many decades, people have been collecting cards with pictures of e.g. movie stars, sports athletes, musical artists, Pokémon™ and so on. Such cards have traditionally been realised as a piece of carton with an image on. According to the present invention, the traditional collector cards are replaced by digital mobile collector cards, which are stored and displayed on a radio terminal, in particular a mobile phone.

This invention allows people to collect pictures which are stored in the terminal, and users may also exchange pictures in order to get a full set of a predefined group of images or pictures of a common image category, such as all members of a certain football team.

According to a first aspect of the present invention, the general object above is fulfilled by a system for handling of mobile collector cards, comprising a mobile communications network, a mobile radio terminal devised for radio communication with said network, said mobile terminal comprising a memory for storing image data and a display for presenting images represented by said image data. The system is characterised in that said terminal is devised for transmission of digital mobile collector cards comprising image data and an image ID code associated with a certain image, over said network, wherein said terminal comprises means for generating and transmitting a data signal including said mobile collector card.

Preferably, said terminal further comprises means for erasing the image data of said mobile collector card from said memory, responsive to the transmission of the data signal.

In a preferred embodiment, said mobile collector card comprises computer code devised to trigger processing means included in said terminal to erase the image data from said memory responsive to said transmission.

In one embodiment, a server in said network holds digital mobile collector cards which are downloadable to said terminal, wherein said server comprises a random selector devised to select a random image from a plurality of images, and means for transmitting a digital mobile collector card including image data representing said random image to said terminal.

Preferably, said plurality of images includes a number of images which are members of a common image category, a full set of said number of images representing a complete image group.

In one embodiment, image group data related to the associated image group, are stored in a data segment which is transmitted with said image data.

Preferably, said terminal comprises means for reading said image ID code, and means for assessing from said image group data whether a complete image group is stored in said memory in the terminal.

In one embodiment, said data segment comprises means for creating a file folder in said memory for said image group.

In one embodiment, said plurality of images comprises still pictures.

In one embodiment, said plurality of images comprises video clips.

According to a second aspect, the object of the invention is fulfilled by a radio communication terminal, comprising a memory for storing image data, a display for presenting images represented by said image data, and radio transmitter and receiver means for transmitting and receiving image data. Said terminal is devised for transmission of digital mobile collector cards comprising image data and an image ID code associated with a certain image, over a radio communications network, wherein said terminal comprises means for generating and transmitting a data signal including said mobile collector card.

Preferably, said terminal comprises means for erasing the image data of said mobile collector card from said memory, responsive to the transmission of the data signal.

In a preferred embodiment, said mobile collector card comprises computer code devised to trigger processing means included in said terminal to erase the image data from said memory responsive to said transmission.

Preferably, said terminal comprises means for retrieving, from a received data signal, image data representing an image forming part of an image group of a common image category, means for retrieving information data related to other images of said image group from image group data comprised in a data segment which is received in said data signal.

In one embodiment, said terminal comprises means for creating a file folder for said image group in said memory, responsive to first received image data of said image group.

Preferably, said terminal comprises means for generating and transmitting a signal to an image service provider, responsive to reception of image data for a last image of said image group.

According to a third aspect, the object of the invention is fulfilled by a method for handling of mobile collector cards in a mobile radio terminal devised for radio communication with a mobile communications network, including the steps of:
- retrieving a digital mobile collector card comprising image data and an image ID code associated with a certain image, from a memory of said mobile terminal;
- generating a data signal including said mobile collector card in said radio terminal; and
- transmitting said radio signal to a receiving party over said network.

Preferably, the method further comprises the step of:
- erasing the image data of said mobile collector card from said memory, responsive to the transmission of the data signal.

In a preferred embodiment, the method includes the steps of:
- executing computer code comprised in said mobile collector card by means of processing means in said terminal, upon said step of generating said signal; and
- erasing the image data under control of the executed computer code.

### Brief description of the drawings

The features and advantages of the present invention will be more apparent from the following description of the preferred embodiments with reference to the accompanying drawings, on which
Fig. 1 schematically illustrates a radio communication system in which the present invention is implemented;
Fig. 2 shows an exemplary communication between a server and a mobile terminal according to an embodiment of the invention;
Fig. 3 schematically illustrates an exemplary communication terminal for use with the present inventive concept;
Fig. 4 schematically illustrates a set of images forming an image group, and a specific image of said group, in an embodiment of the invention; and
Fig. 5 shows an exemplary communication between a first mobile terminal and a second mobile terminal, in accordance with an embodiment of the invention.

### Detailed description of preferred embodiments

The present description refers to radio communication systems including networks and radio terminals. The term radio terminal includes all mobile communication equipment devised for radio communication with a radio station, which radio station also may be mobile terminal or e.g. a stationary base station. Consequently, the term radio terminal includes mobile telephones, communicators, electronic organisers, smartphones, PDA:s (Personal Digital Assistants), vehicle-mounted radio communication devices, or the like, as well as portable laptop computers devised for wireless communication in e.g. a WLAN (Wireless Local Area Network). Furthermore, it should be emphasised that the term comprising or comprises, when used in this description and in the appended claims to indicate included features, elements or steps, is in no way to be interpreted as excluding the presence of other features elements or steps than those expressly stated.

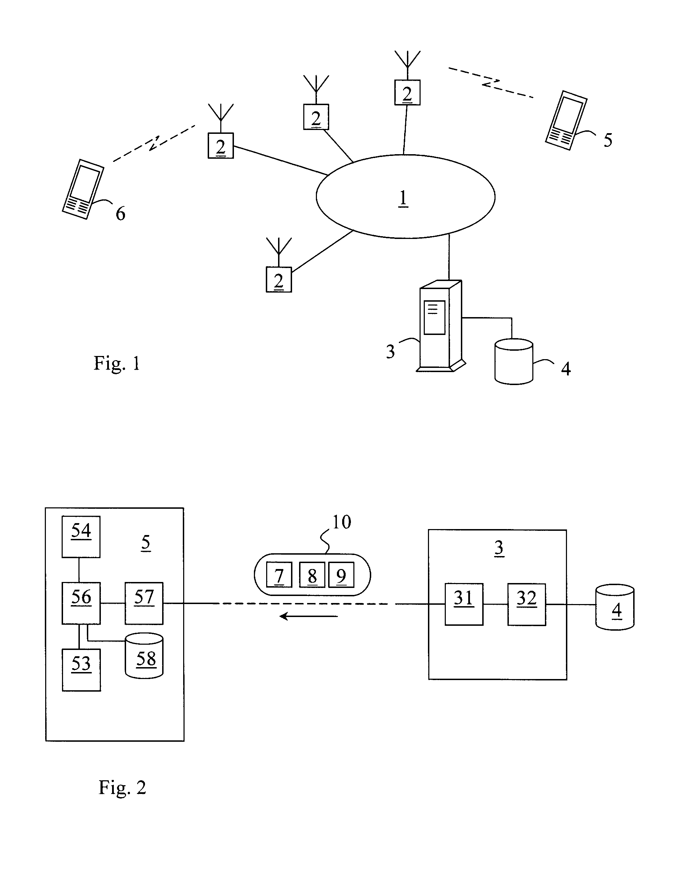

Fig. 1 schematically illustrates a system for mobile collector cards on a general level. A mobile communications network 1 may be a GSM network, a third generation network such as UMTS, or some other form of communications network making use of base stations 2. Each base station 2 comprises a radio transmitter and receiver, and is devised for cordless radio transmission with mobile radio terminals 5,6 present within an area covered by the respective base station. A service provider server 3 is communicatively connected to network 1, by direct implementation in network 1, by connection through the Internet, or by other means. The service provider preferably also holds a plurality of images, represented by image data, in an image memory 4, which may be directly connected to or implemented in server 3, or remotely arranged and accessible through communications network 1 or other network.

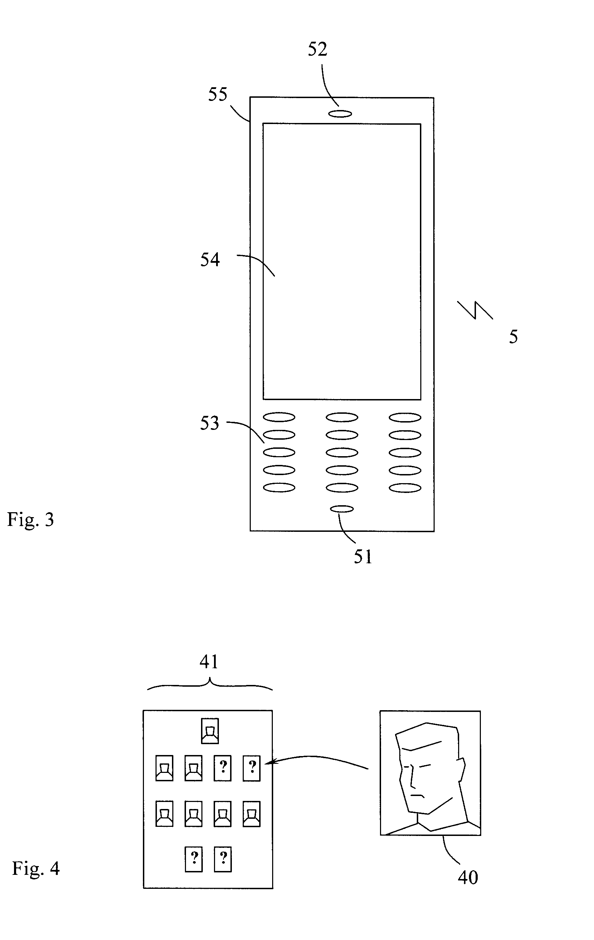

Fig. 3 illustrates a mobile radio terminal in the embodiment of a cellular mobile phone 5, usable for implementation of the present invention. Terminal 5 comprises a chassis or housing 55, carrying a user audio input in the form of a microphone 51 and a user audio output in the form of a loudspeaker 52 or a connector to an ear piece (not shown). A set of keys, buttons or the like constitutes a data input interface 53 is usable e.g. for dialling, according to the established art. A data output interface comprising a display 54 is further included, devised to display communication information, address list etc in a manner well known to the skilled person. The radio communication terminal 5 includes radio transmission and reception electronics (not shown), and is devised with a built-in antenna device inside housing 55.

Fig. 2 schematically illustrates communication between server 3 and mobile terminal 5, where the dashed line represents communication over network 1. As is evident from the drawing, server 3 and mobile terminal 5 are merely illustrated with functional blocks, not as physical embodiments, though Fig. 2 illustrates some of the components of mobile terminal 5 previously mentioned with reference to Fig. 3. Terminal 5 comprises processing means 56, preferably a microprocessor with associated software. Processing means 56 are connected to radio transmitter and receiver means 57, including signal encoding and decoding means, and an antenna. Processing means 56 are also communicatively connected to display 54 and data input means 53, such as a keypad. Furthermore, terminal 5 includes an image data memory 58, for storing image data representing mobile collector cards according to the present invention.

Server 3 comprises signal transmitting means 31, for transmitting a digital signal, which is either directly transmitted as a radio signal, or subsequently transformed into a radio signal. Furthermore, server 3 is communicatively connected to a memory 4, in which a plurality of digital mobile collector cards is stored, comprising image data and image identity data. The image data of said plurality of images is stored in a sorted fashion, wherein the image data for a specific image is selectable by means of an image ID code representative of said specific mobile collector card, which image ID code preferably is unique.

According to a preferred embodiment of the invention, each image of said plurality of images belongs to a certain image group, and the images stored as image data in memory 4 are therefore preferably also associated with an image group ID code. Said plurality of images may comprise several different image groups, where each group contains numerous images. A certain image may also be associated with more than one image group.

In a preferred embodiment, server 3 comprises a random selector 32, which is devised to randomly select an image from the plurality of images stored in memory 4. Preferably, random selector 32 is devised to perform random selection within a specified image group. In such an embodiment, a request may be received by server 3 to retrieve image data from memory 4 of an image belonging to an image group containing the members of a certain rock band, upon which random selector limits the selection to those images belonging to said image group, and randomly selects one of those images. A variant is to have a wider field of selection, such as a certain category, e.g. music artists in general. The retrieved image data is subsequently transmitted to a user or subscriber terminal, such as radio terminal 5, together with the associated image ID code, as a mobile collector card. The request to retrieve an image may originate from terminal 5 or elsewhere. Furthermore, more than one image may be retrieved.

The image retrieved from memory 4 is transmitted in a digital data signal 10, which is sent by radio in communications network 1. Data signal 10 comprises the image data 7 representing the image, the image ID code 8 associated with that image, and preferably also an image group data segment 9 embodied as an agent or Java applet. This image group data segment 9 preferably comprises the image group ID code associated with the group or groups to which the image belongs, and information on which other images belong to said image group. This information on other images may simply include a role for the object of each image, such as "guitar player" or "central defender", or an actual name and other associated information.

When data signal 10 is received by radio transmitter and receiver means 57 of terminal 5, processing means 56 retrieves the image data 7 and stores it in memory 58, and alternatively also directly sends the image data 7 to display 54 for presentation to the terminal user. Furthermore, by retrieving the image group ID code from image group data segment 9, processing means 56 are capable of storing image data 7 with an appropriate address. In a preferred embodiment, when receiving a first image of an image group, a file folder for the associated image group is automatically created in the terminal, into which folder the image data of said first image is stored.

Fig. 4 illustrates an exemplary embodiment of the inventive concept. An image group 41 contains eleven digital images. Each of these images is a picture of one of the players of a football team, such Arsenal. The group may of course also include more images, representing substitutes, coaches, or the like. An Arsenal fan has decided to collect the mobile collector cards representing the starting eleven players of the winning team of the FA Cup of 2002. In a first step, he has purchased a start-up set of images from a service provider. This was performed by transmitting an order from his terminal 5 to server 3, specifying the image group in question. This may e.g. be executed by transmitting the predetermined image group ID code, or by making an online selection over a WAP interface. Payment may be made by any known means, such as credit card, premium SMS or by adding a debit amount on the telephone account of the user. In return, the user receives a data signal 10 with the image data 7 representing e.g. seven separate images of players in the team. In a preferred embodiment, these seven players are randomly selected from the total of eleven players, as previously mentioned, and may also contain doubles. In a preferred embodiment, an image group data segment 9 is received with image data 7 from server 3. This data segment 9 includes a representation of the entire group as shown to the left in Fig. 4. By correlating this representation with the internal memory 58 of the terminal, processing means 56 are devised to illustrate the representation on display 54, with the images stored placed in the correct positions in the team. A question mark indicates which player images the user lacks. Further information may also be given in the displayed representation, such as the name of the missing players.

In order to get the rest of the team, the user may also contact other users, e.g. users who collect the same group or for some other reason holds images of the group in question. Links to such other users, or to a site where others may register mobile collector cards as available for trade, may also be included in data segment 9. By contacting such other users or sites, the user may trade one or more of the images stored in the terminal memory 58 for one or more other images by digital communication over network 1. Needless to say, the trade may not necessarily be made with a mobile collector card of the same group or even of the same category, nor does it have to involve the giving and taking of equally many mobile collector cards. In the example of Fig. 4, the user has been able to trade a card of less interest for the left wing defenseman 40. When receiving a data signal containing the image data of image 40, said signal includes the image ID code for that image. If this code is not unique, than an image group ID code must also be transmitted. When the data signal is received and decoded, processing means 56 automatically stores the image data in the dedicated file folder, and updates the group representation such that the blank spot is filled with the new image.

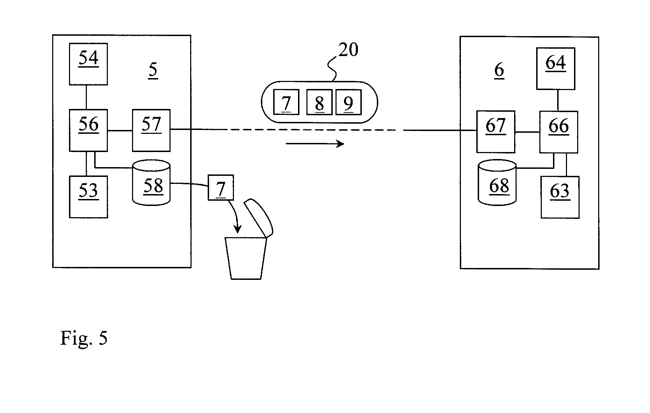

An important feature for the present invention is to ensure that the mobile collector cards cannot be copied in the user terminal. Therefore, processing means 56 are devised to erase the image data 7 of a stored image, when a data signal comprising said image data is transmitted from the mobile terminal to another party, such as another terminal 6. Fig. 5 illustrates a situation similar to that of Fig. 2, but related to trading of images between a first terminal 5 and a second terminal 6. The components illustrated for terminal 6 correspond to those of terminal 5 with the identical last figure. Fig. 5 illustrates a situation where a data signal 20 including image data 7 of a certain image is transmitted from first terminal 5 to second terminal 6. As before, data signal 20 preferably also comprises the image ID code 8 for that image, and a data segment 9 with information related to the group as such. According to the invention, processing means 56 in terminal 5 erases the image data 7 when data signal 20 is transmitted. This may be realised by pre-coded software in the terminal. However, in a preferred embodiment, each mobile collector card is associated with copy control software, which is coded with or into the image data 7. This copy control data is devised to trigger processing means 56 to erase image data 7 from memory 58, when the signal comprising image data 7 is transmitted. In Fig. 5, this is illustrated by image data 7 being moved to a waste basket from which it cannot be retrieved.

In one embodiment, the images of a certain group are still pictures, so called snapshots. However, the present invention is equally applicable to mobile collector cards with moving pictures, i.e. video clips.

In one embodiment, the obtaining of a full set of images in a group, such as the team in Fig. 4, may give the user a benefit from the service provider. Such a benefit may be a fresh set of images of another image group, a discount for another service, or the like.

The foregoing has described the principles, preferred embodiments and modes of operation of the present invention. However, the invention should not be construed as being limited to the particular embodiments discussed above, which are to be regarded as illustrative rather than restrictive, wherefore it should be appreciated that variations may be made in those embodiments by workers skilled in the art without departing from the scope of the present invention as defined by the following claims.

## Claims

1. System for handling of mobile collector cards, comprising a mobile communications network (1), a mobile radio terminal (5) devised for radio communication with said network, said mobile terminal comprising a memory (58) for storing image data and a display for presenting images represented by said image data, **characterised in that** said terminal is devised for transmission of digital mobile collector cards comprising image data (7) and an image ID code (8) associated with a certain image, over said network, wherein said terminal comprises means (57) for generating and transmitting a data signal (20) including said mobile collector card.

2. The system as recited in claim 1, **characterised in that** said terminal comprises means for erasing the image data of said mobile collector card from said memory, responsive to the transmission of the data signal.

3. The system as recited in claim 1, **characterised in that** said mobile collector card comprises computer code devised to trigger processing means included in said terminal to erase the image data from said memory responsive to said transmission.

4. The system as recited in claim 2 or 3, **characterised in that** a server (3) in said network holds digital mobile collector cards (4) which are downloadable to said terminal, wherein said server comprises a random selector (32) devised to select a random image from a plurality of images, and means for transmitting a digital mobile collector card including image data representing said random image to said terminal.

5. The system as recited in claim 4, **characterised in that** said plurality of images includes a number of images which are members of a common image category, a full set of said number of images representing a complete image group.

6. The system as recited in claim 5, **characterised in that** image group data related to the associated image group, are stored in a data segment (9) which is transmitted with said image data.

7. The system as recited in claim 6, **characterised in that** said terminal comprises means for reading said image ID code, and means for assessing from said image group data whether a complete image group is stored in said memory in the terminal.

8. The system as recited in claim 6, **characterised in that** said data segment comprises means for creating a file folder in said memory for said image group.

9. The system as recited in any of the preceding claims, **characterised in that** said plurality of images comprises still pictures.

10. The system as recited any of the preceding claims, **characterised in that** said plurality of images comprises video clips.

11. Radio communication terminal (5), comprising a memory (58) for storing image data, a display (54) for presenting images represented by said image data, and radio transmitter and receiver means (57) for transmitting and receiving image data, **characterised in** said terminal is devised for transmission of digital mobile collector cards comprising image data (7) and an image ID code (8) associated with a certain image over a radio communications network (1), wherein said terminal comprises means (56) for generating and transmitting a data signal (20) including said mobile collector card.

12. The radio communication terminal as recited in claim 11, **characterised in that** said terminal comprises means for erasing the image data of said mobile collector card from said memory, responsive to the transmission of the data signal.

13. The radio communication terminal as recited in claim 11, **characterised in that** said mobile collector card comprises computer code devised to trigger processing means included in said terminal to erase the image data from said memory responsive to said transmission.

14. The radio communication terminal as recited in claim 12 or 13, **characterised in that** said terminal comprises means for retrieving, from a received data signal, image data representing an image forming part of an image group of a common image category, means for retrieving information data related to other images of said image group from image group data comprised in a data segment which is received in said data signal.

15. The radio communication terminal as recited in claim 14, **characterised in that** said terminal comprises means for creating a file folder for said image group in said memory, responsive to first received image data of said image group.

16. The radio communication terminal as recited in claim 14, **characterised in that** said terminal comprises means for generating and transmitting a signal to an image service provider, responsive to reception of image data for a last image of said image group.

17. Method for handling of mobile collector cards in a mobile radio terminal (5) devised for radio communication with a mobile communications network (1), **characterised by** the steps of:
- retrieving a digital mobile collector card comprising image data (7) and an image ID code (8) associated with a certain image, from a memory in said mobile terminal;
- generating a data signal including said mobile collector card in said radio terminal; and
- transmitting said radio signal to a receiving party (6) over said network.

18. The method as recited in claim 17, **characterised by** the step of:
- erasing the image data of said mobile collector card from said memory, responsive to the transmission of the data signal.

19. The method as recited in claim 17, **characterised by** the steps of:
- executing computer code comprised in said mobile collector card by means of processing means in said terminal, upon said step of generating said signal; and
- erasing the image data under control of the executed computer code.
